# EUROPÄISCHE PATENTSCHRIFT

(11) **EP 2 248 653 B1**
(45) Veröffentlichungstag und Bekanntmachung des Hinweises auf die Patenterteilung: **22.08.2012**
(21) Anmeldenummer: 10161957.5
(22) Anmeldetag: 05.05.2010
(51) Int. Cl.: B29C 47/88, B29C 59/04

(54) **Verfahren zur Herstellung einer Oberflächenschutzfolie**
Method for manufacturing a surface protection film
Procédé de fabrication d'une feuille de protection de surfaces

(30) Priorität: 09.05.2009 DE 102009020624
(43) Veröffentlichungstag der Anmeldung: 10.11.2010
(73) Patentinhaber: Nordenia Deutschland Gronau GmbH, 48599 Gronau (DE)
(72) Erfinder: Dohe, Dieter, 49525 Lengerich (DE); Lebkücher, Klaus-Peter, 49525 Lengerich (DE)
(74) Vertreter: Albrecht, Rainer Harald

(56) Entgegenhaltungen:
- EP-A1- 0 836 927
- EP-A1- 1 491 320
- WO-A2-2008/046164
- FR-A1- 2 912 683
- JP-A- 2003 213 054
- US-A- 5 658 514

## Beschreibung

Die Erfindung betrifft ein Verfahren zur Herstellung einer Oberflächenschutzfolie, die auf einer Seite eine hochglänzende Oberfläche aufweist.

Es gibt zahlreiche Produkte aus Kunststoff, die durch Umformung, z. B. Tiefziehen, hergestellt werden und eine große Oberflächenqualität sowie einen hohen Glanz aufweisen. Hierzu zählen beispielsweise Sanitärwannen aus Kunststoff, Helmvisiere sowie Kunststoffgehäuse für hochwertige Elektronikartikel sowie Displays. Um die Kunststoffoberfläche beim Umformen und beim Transport zu schützen, wird vorher eine Oberflächenschutzfolie als temporärer Schutz aufgebracht, die vor dem Gebrauch wieder entfernt wird. Um ein leichtes und rückstandsfreies Abziehen der Folie zu gewährleisten, werden Oberflächenschutzfolien verwendet, die keine Kleberschicht aufweisen, sondern aufgrund einer hochglänzenden Oberfläche adhäsiv, das heißt durch den sogenannten Glasscheibeneffekt, auf der zu schützenden Fläche haften. Die Haftseite der Oberflächenschutzfolie ist sehr glatt und legt sich an die ihrerseits glatte, zu schützende Oberfläche an. Die Foliendicke einer Oberflächenschutzfolie beträgt weniger als 150 µm, wobei dünnere Folien mit einer Foliendicke von maximal 120 µm unter anwendungstechnischen Gesichtspunkten bevorzugt sind.

Um beim Aufrollen der Oberflächenschutzfolie ein Verblocken der Folie auf der Rolle zu vermeiden, erhält die andere Seite der Folie eine raue oder mit einer Prägung versehene Oberfläche oder wird mit Antiblock-Additiven ausgestattet.

Die Oberflächenschutzfolien weisen an ihrer glatten Seite immer eine gewisse Anzahl von Oberflächenfehlern in Form von Stippen, z. B. durch partielle Verunreinigungen, unaufgeschmolzenes Material, überhitztes Material oder in Form von Düsenstreifen, die auf Unebenheiten oder Verunreinigungen der Extrusionsdüse zurückzuführen sind, auf. Die Fehlstellen sind partielle Dickstellen, die aus der Glanzfläche herausragen und sowohl zu einer Beeinträchtigung der Hafteigenschaften als auch zu einer Markierung oder Beschädigung der glänzenden Oberfläche des zu schützenden Gegenstandes führen können.

Aus EP 0 434 180 B1 ist eine mehrschichtige Oberflächenschutzfolie mit einer glatten Seite und einer matt geprägten Seite bekannt. Die Folie wird als Coextrusionsfolie hergestellt und durchläuft anschließend eine Prägestufe, in der die matte Seite der Folie erzeugt wird. Auf der glatten Seite ist eine Rautiefe zwischen etwa 0,25 und 10 Rₐ erreichbar, wobei bis zu zehn Oberflächenfehler in Form von Stippen pro Quadratmeter in Kauf genommen werden müssen.

In US 5 693 405 wird eine mehrschichtige, klebstofffreie Oberflächenschutzfolie beschrieben, die als Coextrusionsfolie hergestellt wird. Die Coextrusionsfolie durchläuft nach der Extrusion ein Walzenpaar, das eine erste Walze mit einer glatten Oberfläche sowie eine zweite Walze mit einer geprägten Oberfläche umfasst. Die nach diesem Verfahren hergestellte Oberflächenschutzfolie weist eine glatte Seite sowie eine matte bzw. geprägte Seite auf. Das Auftreten von Oberflächenfehlern in Form von Stippen sowie auch Düsenstreifen, die auf Unebenheiten oder Verunreinigungen der Extrusionsdüse zurückzuführen sind, lässt sich nicht vermeiden.

Aus DE 196 05 951 A1 ist ein Glättwerk zur Herstellung von beidseitig geglätteten Platten und Folien aus thermoplastischem Kunststoff bekannt, wobei die geglätteten Materialien eine Dicke zwischen etwa 0,5 und 50 mm aufweisen können. Das Glättwerk wird von einer Glättwalze und einem Metallband gebildet, welches um zwei der Glättwalze benachbarte Umlenkwalzen geführt wird und diese partiell umschlingt.

Aus EP 1 491 320 A1 ist ein Verfahren zur Herstellung einer Verpackungsfolie bekannt. Ein extrudierter Kunstharz wird im Schmelzezustand einem Spalt zwischen einer Kühlwalze und einem umlaufenden metallischen Glättband zugeführt und dort verpresst. Ebenso wie die Oberfläche des Glättbandes kann auch die der Kühlwalze glatt ausgebildet sein. Die nach diesem Verfahren hergestellte Verpackungsfolie weist zwei glatte Seiten auf.

Aus US 5 658 514 A ist ein Verfahren zur Herstellung einer Verpackungsfolie für Lebensmittel und Medizin bekannt. Bei dem Verfahren wird ein extrudierter Kunststoffschmelzefilm im Schmelzzustand einem Spalt zwischen einer Kühlwalze und einem umlaufenden metallischen Glättband zugeführt. Das Glättband sowie die Kühlwalze weisen jeweils eine glatte Oberfläche auf. Die mit diesem Verfahren hergestellte Verpackungsfolie weist somit ebenfalls an beiden Seiten eine glatte Oberfläche auf.

Aus EP 0 836 927 A1 ist ein Verfahren zur Herstellung einer mehrschichtigen Dekorfolie mit einer Strukturoberfläche bekannt. Eine Trägerfolie und ein extrudierter Kunststoffschmelzfilm werden in einem von einer Prägewalze und einem umlaufenden Glättband gebildeten Spalt verpresst und verklebt. Die Folie wird als Oberfläche von Möbeln verwendet und ist dort dauerhaft verklebt.

Aus WO 2008/046164 A2 ist eine dreischichtige Coextrusionsfolie bekannt, die zur Herstellung von Infusionsbeuteln verwendet wird. Ein Kunststoffschmelzefilm wird im Schmelzezustand einem Spalt zwischen einer Kühlwalze und einem umlaufenden metallischen Glättband zugeführt. Sowohl die Oberfläche des Glättbandes als auch die der Kühlwalze sind glatt ausgeführt. Die nach diesem Verfahren hergestellte Folie weist zwei glatte Seiten auf.

Aus FR 29112683 A1 ist ein Verfahren bekannt, mit dem eine dreischichtige Coextrusionsfolie hergestellt werden kann, die zur Herstellung von Postern, Spielkarten sowie für Rubbellose verwendet wird. Der extrudierte Kunststoffschmelzefilm wird im Schmelzezustand einem Spalt zwischen einer Kühlwalze und einem umlaufenden metallischen Glättband zugeführt. Die Oberfläche des Glättbandes sowie die der Kühlwalze weisen dabei eine gleiche Oberflächenstruktur auf.

Vor diesem technologischen Hintergrund liegt der Erfindung die Aufgabe zugrunde, ein Verfahren anzugeben, mit dem Oberflächenschutzfolien hergestellt werden können, die auf einer Seite eine hochglänzende und fehlstellenfreie Oberfläche aufweisen und beim Aufrollen zu einer Rolle nicht verblocken.

Gegenstand der Erfindung und Lösung dieser Aufgabe ist ein Verfahren nach Anspruch 1.

Bei dem Verfahren, von dem die Erfindung ausgeht, wird ein mittels einer Schlitzdüse extrudierter Kunststoffschmelzefilm im Schmelzezustand einem Spalt zwischen einer Kühlwalze und einem umlaufenden metallischen Glättband zugeführt, durch Anlage an der Kühlwalze gekühlt und in einem Umschlingungsbereich, in dem das Glättband auf die Kühlwalze wirkt, mit einem durch die Bandspannung des Glättbandes erzeugten Druck flächig beaufschlagt. Bei dem Glättband handelt es sich beispielsweise um ein umlaufendes endloses Stahlband. Durch den Einsatz des Glättbandes, dem sogenannten Sleeve-Band, werden optimale optische und mechanische Eigenschaften bei den produzierten Folien erreicht. Durch die flächige Anpressung des in den Spalt eintretenden Kunststoffschmelzefilms bei gleichzeitig einsetzender Kühlung werden Oberflächenfehler z. B. durch partielle Verunreinigungen, unaufgeschmolzenes Material, überhitztes Material, Unebenheiten oder Verunreinigungen der Extrusionsdüse und dergleichen, wirksam beseitigt. Vorteilhaft ist ferner, dass durch eine große Abkühlgeschwindigkeit, die sich bei dem erfindungsgemäßen Verfahren einstellt, die Bildung von Kristalliten unterdrückt werden kann und Folien in amorphen Strukturen entstehen, die schrumpf- und schwindungsfrei sind.

Die Oberflächengüte der glänzenden Oberfläche ist durch die Oberflächenbeschaffenheit der Kühlwalze oder des Glättbandes beeinflussbar. Gemäß einer bevorzugten Ausführung der Erfindung weist die auf den Kunststoffschmelzefilm wirkende Kontaktfläche der Kühlwalze oder des Glättbandes eine Rautiefe Rt von weniger als 10 µm, vorzugsweise eine Rautiefe von weniger als 1 µm, auf, wobei die Rautiefe Rt den Abstand zwischen den Oberflächenspitzen und dem Oberflächengrund beschreibt. Die Kontaktfläche der Kühlwalze oder des Glättbandes kann eine durch eine Finishbearbeitung, z. B. durch Honen, Feinstschleifen, Fein- oder Feinstläppen, verbesserte Oberfläche aufweisen oder mit einer die Oberflächengüte versehenen Beschichtung versehen sein. Als Beschichtung kommen beispielsweise Chromüberzüge oder andere galvanische Überzüge in Betrachtung.

Mit dem erfindungsgemäßen Verfahren lassen sich Oberflächenschutzfolien herstellen, die eine hochglänzende Seite sowie eine matte Seite aufweisen, indem die Oberflächen der Kühlwalze und des Glättbandes entsprechend gewählt werden. Das erfindungsgemäße Verfahren sieht daher vor, dass nur die Kühlwalze oder nur das Glättband eine auf den Kunststoffschmelzefilm wirkende glatte Kontaktfläche zur Erzeugung einer hochglänzenden Folienoberfläche aufweist und dass die auf den Kunststoffschmelzefilm wirkende Gegenfläche als raue Fläche ausgebildet ist, um eine matte Folienoberfläche zu erzeugen, die nicht auf glatten Flächen haftet. Der Begriff der rauen Fläche schließt auch Prägeflächen ein.

Anhand weniger orientierender Versuche kann der Umschlingungsbereich, in dem das Glättband auf die Kühlwalze wirkt, sowie auch die geeignete Bandspannung zur Erzeugung des Anpressdruckes festgelegt werden. Der Umschlingungsbereich, in dem das Glättband auf die Kühlwalze wirkt, ist regelmäßig kleiner als der Kühlbereich, in dem der Kunststoffschmelzefilm an der Kühlwalze anliegt und entspricht beispielsweise einem Umschlingungswinkel zwischen 15° und 90°.

Die Oberflächenschutzfolie wird erfindungsgemäß aus einem mehrschichtigen Kunststoffschmelzefilm hergestellt, der eine erste Außenschicht aus einem zur Herstellung einer hochglänzenden Oberfläche geeigneten Polymer, eine Kernschicht sowie eine zweite Außenschicht aufweist. Die zweite Außenschicht kann zusätzlich auch Antiblock-Additive enthalten. Die Schichten werden coextrudiert. Die Dicke der Kernschicht wird so bemessen, dass eine Prägung der zweiten Außenschicht zur Erzeugung einer matten Folienseite sich nicht störend auf die Oberfläche der ersten Außenschicht auswirkt. Als Antiblock-Additive kommen beispielsweise Siliziumdioxide, Calciumcarbonate, Wachse, Silikate, Polybuten und dergleichen in Betracht.

Nach dem erfindungsgemäßen Verfahren kann eine Oberflächenschutzfolie hergestellt werden, die eine erste Außenschicht aus einem LD-Polyethylen, eine Kernschicht aus einem MD-Polyethylen sowie eine zweite Außenschicht aus einer Mischung aus PE-MD und Polybuten (PB) aufweist. Die erste Außenschicht weist eine hochglänzende und fehlstellenfreie Oberfläche auf. Die zweite Außenschicht weist eine prägemattierte Oberfläche auf oder hat infolge der Polymerzusammensetzung Antiblockeigenschaften.

Nach dem erfindungsgemäßen Verfahren können Oberflächenschutzfolien hergestellt werden, die eine Foliendicke von mindestens 80 µm aufweisen. Vorzugsweise werden Oberflächenschutzfolien in einer Foliendicke von 80 µm bis 120 µm hergestellt. Bei der Herstellung dünnerer Oberflächenschutzfolien wird das beschriebene Verfahren mit abnehmender Foliendicke zunehmend problematisch, weil keine Polymerschicht mit ausreichender Dämpfung zwischen der Kühlwalze und dem Glättband mehr vorhanden ist, die den Druck im Walzenspalt gleichmäßig verteilt. Dadurch kann es zu Unregelmäßigkeiten auf der Folienoberfläche kommen. Ferner besteht die Gefahr, dass die Oberflächen der Kühlwalze und des Glättbandes leicht beschädigt werden.

Im Folgenden wird die Erfindung anhand von Ausführungsbeispielen erläutert. Es zeigen schematisch:
- **Fig. 1**: ein Anlagenschema zur Herstellung einer Oberflächenschutzfolie, die auf mindestens einer Seite eine hochglänzend, fehlstellenfreie Oberfläche aufweist,
- **Fig. 2**: den Schichtenaufbau von Coextrusionsfolien, die mit dem in Fig. 1 dargestellten Verfahren herstellbar sind.
- **Fig.3 bis 5**: dem Schichtenaufbar von anderen Coextensionsfolien, wobei Oberflächenschutzfolien 8,8',8" mit Releasefolien 9 versehen werden können.

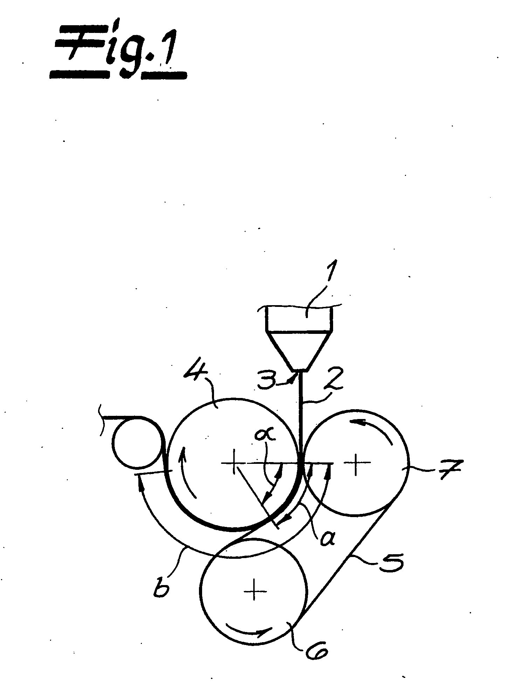

Bei dem in Fig. 1 dargestellten Verfahren presst ein Extruder 1 einen Kunststoffschmelzefilm 2 durch eine Schlitzdüse 3. Der Kunststoffschmelzefilm 2 wird im Schmelzezustand einem Spalt zwischen einer Kühlwalze 4 und einem umlaufenden metallischen Glättband 5 zugeführt, durch Anlage an der Kühlwalze 4 gekühlt und in einem Umschlingungsbereich a, in dem das Glättband 5 auf die Kühlwalze 4 wirkt, mit einem durch die Bandspannung des Glättbandes 5 erzeugten Druck flächig beaufschlagt. Bei dem Glättband 5 handelt es sich um ein Endlosband, das zwischen Walzen 6, 7 gespannt ist. Als Glättband 5 kann beispielsweise ein Stahlband eingesetzt werden. Die Spannung des Glättbandes 5 ist einstellbar. Die Bandspannung sowie auch die Kontaktlänge des Glättbandes 5 mit dem Kunststoffschmelzefilm 2 kann entsprechend den Produktionsanforderungen verändert werden.

Der Umschlingungsbereich a, in dem das Glättband 5 auf die Kühlwalze 4 wirkt, ist kleiner als der Kühlbereich b, in dem der Kunststoffschmelzefilm 2 an der Kühlwalze 4 anliegt, und entspricht einem Umschlingungswinkel α zwischen 15° und 90°.

Die Kühlwalze 4 oder das Glättband 5 weisen eine auf den Kunststoffschmelzefilm 2 wirkende glatte Kontaktfläche zur Erzeugung einer hochglänzenden Folienoberfläche auf, die vorzugsweise eine Rautiefe von weniger als 10 µm aufweist. Die Rautiefe kann durch eine Finishbearbeitung der Kontaktfläche oder eine die Oberflächengüte verbessernde Beschichtung erreicht werden. Besonders bevorzugt ist eine Rautiefe von weniger als 1 µm.

Die auf den Kunststoffschmelzefilm wirkende Gegenfläche ist als Prägefläche bzw. raue Fläche ausgebildet sein, um eine matte Folienoberfläche zu erzeugen, die nicht auf glatten Flächen haftet.

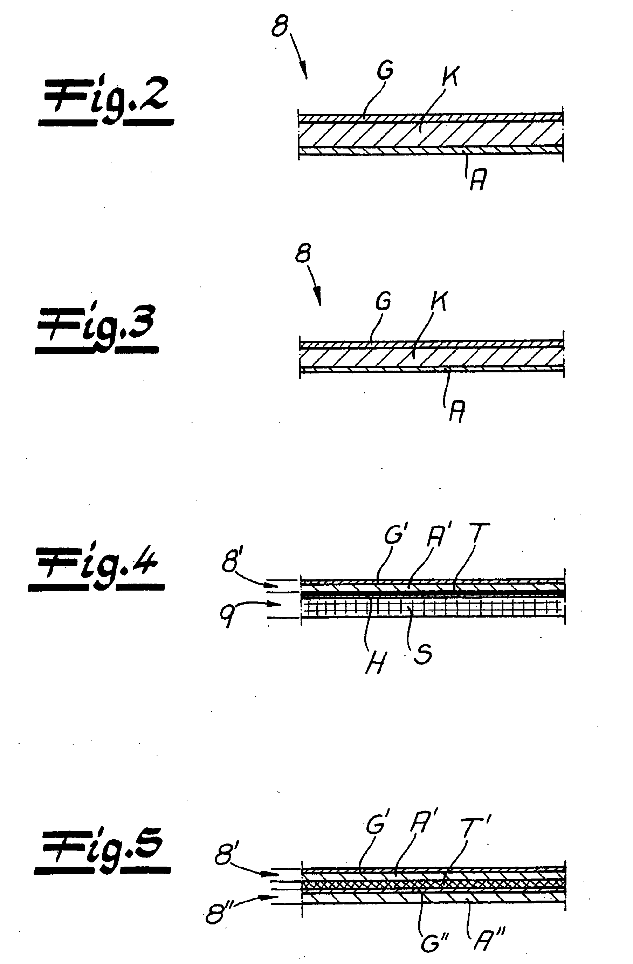

Die Fig. 2 zeigt den Schichtenaufbau einer nach dem beschriebenen Verfahren hergestellten Oberflächenschutzfolie 8. Die Oberflächenschutzfolie 8 ist dreischichtig und weist eine 20 µm dicke Glanzschicht G aus PE-LD mit einer hochglänzenden Oberfläche, eine 60 µm dicke Kernschicht K aus PE-MD sowie eine 20 µm dicke Außenschicht A aus PE-MD auf. Die Außenschicht A weist eine matte Folienoberfläche auf, die nicht auf glatten Flächen haftet.

Mit dem beschriebenen Verfahren können dreischichtige Oberflächenschutzfolien 8 hergestellt werden, die eine Gesamtdicke von mindestens 80 µm aufweisen. Bei der Herstellung dünnerer Oberflächenschutzfolien 8 besteht das Problem, dass keine Polymerschichten mit ausreichender Dämmfunktion zwischen der Kühlwalze 4 und dem Glättband 5 mehr vorhanden ist, welche den Druck gleichmäßig verteilen. Dadurch kann es zu Oberflächenunregelmäßigkeiten auf der Folie kommen. Ferner besteht die Gefahr, dass die empfindlichen Oberflächen der Kühlwalze 4 und des Glättbandes 5 leicht beschädigt werden.

Zur Herstellung einer Oberflächenschutzfolie 8 mit einer Foliendicke von weniger als 80 µm kann die Oberflächenschutzfolie 8' daher durch Coextrusion im Verbund mit einer Releasefolie 9 hergestellt werden, die vor dem Gebrauch der Oberflächenschutzfolie 8' rückstandsfrei abziehbar ist.

## Patentansprüche

1. Verfahren zur Herstellung einer Oberflächenschutzfolie (8), die auf einer Seite eine hochglänzende Oberfläche ohne Fehlstellen aufweist, wobei ein mittels einer Schlitzdüse (3) extrudierter Kunststoffschmelzefilm (2) im Schmelzezustand einem Spalt zwischen einer Kühlwalze (4) und einem umlaufenden metallischen Glättband (5) zugeführt wird, durch Anlage an der Kühlwalze (4) gekühlt wird und in einem Umschlingungsbereich (a), in dem das Glättband (5) auf die Kühlwalze (4) wirkt, mit einer durch die Bandspannung des Glättbandes (5) erzeugten Druck flächig beaufschlagt wird, wobei die Kühlwalze (4) oder das Glättband (5) eine auf den Kunststoffschmelzefilm (2) wirkende glatte Kontaktfläche zur Erzeugung einer hochglänzenden Folienoberfläche aufweist, **dadurch gekennzeichnet, dass** die auf den Kunststoffschmelzefilm (2) wirkende Gegenfläche als raue Fläche ausgebildet ist, um eine matte Folienoberfläche zu erzeugen, die nicht auf glatten Flächen haftet, und dass die Oberflächenschutzfolie (8) aus einem dreischichtigen Kunststoffschmelzefilm (2) hergestellt wird, der eine außen liegende Glanzschicht (G) aus einem zur Herstellung einer hochglänzenden Oberfläche geeigneten Polymer, eine Kernschicht (K) und eine der Glanzschicht (G) gegenüberliegende Außenschicht (A) aufweist.

2. Verfahren nach Anspruch 1, **dadurch gekennzeichnet, dass** die auf den Kunststoffschmelzefilm (2) wirkende Kontaktfläche der Kühlwalze (4) und/oder des Glättbandes (5) eine Rautiefe von weniger als 10 µm, vorzugsweise einer Rautiefe von weniger als 1 µm, aufweist.

3. Verfahren nach Anspruch 2, **dadurch gekennzeichnet, dass** die Kontaktfläche der Kühlwalze (4) oder des Glättbandes (5) eine durch eine Finishbearbeitung verbesserte Oberfläche aufweist oder mit einer die Oberflächengüte verbessernden Beschichtung versehen ist.

4. Verfahren nach einem der Ansprüche 1 bis 3, **dadurch gekennzeichnet, dass** die Außenschicht (A) Antiblock-Additive enthält.

5. Verfahren nach einem der Ansprüche 1 bis 4, **dadurch gekennzeichnet, dass** die Oberflächenschutzfolie (8) eine Foliendicke von 80 µm bis 120 µm aufweist.

## Claims

1. A method for manufacturing a surface protection film (8) which on one side comprises a high-gloss surface without flaws, wherein a plastic melt film (2) extruded by means of a slot die (3) is supplied in a melt state to a gap between a cooling roller (4) and a rotating metallic smoothing belt (5), is cooled through contact with the cooling roller (4) and, in a wrapping region (a) in which the smoothing belt (5) acts upon the cooling roller (4), is areally acted upon by pressure generated by the belt tension of the smoothing belt (5), wherein the cooling roller (4) or the smoothing belt (5) comprises a smooth contact surface acting upon the plastic melt film (2) for producing a high-gloss film surface, **characterised in that** the opposite surface acting upon the plastic melt film (2) is implemented as a rough surface in order to produce a matt film surface which does not adhere to smooth surfaces and **in that** the surface protection film (8) is manufactured from a three-layer plastic melt film (2) comprising an outer glossy layer (G) made of a polymer suitable for producing a high-gloss surface, a core layer (K) and an outer layer (A) opposite the glossy layer (G).

2. Method according to claim 1, **characterised in that** the contact surface of the cooling roller (4) and/or of the smoothing belt (5) acting upon the plastic melt film (2) comprises a surface roughness of less than 10 µm, preferably a surface roughness of less than 1 µm.

3. Method according to claim 2, **characterised in that** the contact surface of the cooling roller (4) or of the smoothing belt (5) comprises a surface improved by finish processing or is provided with a coating improving surface quality.

4. Method according to one of claims 1 to 3, **characterised in that** the outer layer (A) contains anti-blocking additives.

5. Method according to one of claims 1 to 4, **characterised in that** the surface protection film (8) comprises a film thickness of 80 µm to 120 µm.

## Revendications

1. Procédé de fabrication d'un film protecteur de surfaces (8), qui sur une face présente une surface haute brillance sans défaut, un film en masse de matière plastique fondue (2) extrudé au moyen d'un filtre de soufflage (3) étant amené à l'état de masse fondue vers un interstice entre le tambour de refroidissement (4) et une bande de lissage (5) métallique en rotation, étant refroidi par application sur le tambour de refroidissement (4) et dans une zone d'enlacement (a) dans laquelle la bande de lissage (5) agit sur le tambour de refroidissement (4), étant soumis à pleine surface à une pression générée par la tension de bande de la bande de lissage (5), le tambour de refroidissement (4) ou la bande de lissage (5) comportant une surface de contact lisse agissant sur le film en masse de matière plastique fondue (2) pour la création d'une surface de film haute brillance, **caractérisé en ce que** la surface antagoniste agissant sur le film en masse de matière plastique fondue (2) est conçue en tant que surface rugueuse, pour créer une surface de film mate, qui n'adhère pas sur des surfaces lisses et **en ce qu'**on fabrique le film protecteur de surfaces (8) à partir d'un film de masse de matière plastique fondue (2) tricouches, qui présente une couche brillante (G) située à l'extérieur en un polymère adapté pour la fabrication d'une surface haute brillance, une couche centrale (K) et une couche extérieure (A) opposée à la couche brillante (G).

2. Procédé selon la revendication 1, **caractérisé en ce que** la surface de contact du tambour de refroidissement (4) et/ou de la bande de lissage (5) agissant sur le film de masse de matière plastique fondue (2) présente une profondeur de rugosité inférieure à 10 µm, de préférence, une profondeur de rugosité inférieure à 1 µm.

3. Procédé selon la revendication 2, **caractérisé en ce que** la surface de contact du tambour de refroidissement (4) ou de la bande de lissage (5) présente une surface améliorée par un traitement de finition ou est dotée d'un revêtement améliorant la qualité de surface.

4. Procédé selon l'une quelconque des revendications 1 à 3, **caractérisé en ce que** la couche extérieure (A) contient des additifs antiblocage.

5. Procédé selon l'une quelconque des revendications 1 à 4, **caractérisé en ce que** le film protecteur de surfaces (8) présente une épaisseur de film de 80 µm à 120 µm.
